# EUROPEAN PATENT APPLICATION

(11) **EP 4 787 353 A1**
(43) Date of publication of application: **05.08.2026**
(21) Application number: 24882009.4
(22) Date of filing: 26.08.2024
(51) Int. Cl.: G09B 23/28, G09B 9/00

(54) **PROCEDURE SIMULATOR**

(30) Priority: 27.10.2023 JP 2023184888
(71) Applicant: Terumo Kabushiki Kaisha, Tokyo 151-0072 (JP)
(72) Inventor: OZAKI, Kouji, Ashigarakami-gun, Kanagawa 259-0151 (JP)
(74) Representative: TBK
(86) International application number: PCT/JP2024/030330
(87) International publication number: WO 2025/088892

(57) **Abstract**

A procedure simulator used for training of introduction of a medical instrument into a radial artery in a human body, the procedure simulator including: an upper limb model formed by simulating an appearance of a portion including a portion extending from a hand to a forearm portion in an upper limb of the human body; and a puncture pad having hollow portions through which simulated blood vessels are allowed to pass, in which a surface on a palm side of the upper limb model has a holding groove, the holding groove has a pad holding groove for holding the puncture pad in a portion extending from the wrist joint to the forearm portion, and a blood vessel holding groove that extends from the pad holding groove to a proximal end side from the wrist joint to the forearm portion and holds the simulated blood vessels, and the upper limb model has a discharge portion that penetrates from a bottom surface of the pad holding groove to a surface on a dorsal side of the upper limb model and allows simulated blood leaking from the simulated blood vessels due to puncture into the simulated blood vessels through the puncture pad to be discharged to the dorsal side.

## Description

### Technical Field

The present disclosure relates to a procedure simulator.

### Background Art

There is known a procedure simulator used for training of introduction (trans-radial arterial approach or trans radial approach (TRA)) of a medical instrument into a radial artery in a human body, the procedure simulator including an upper limb model formed by simulating an appearance of a portion including a portion extending from a hand to a forearm portion in an upper limb of the human body, and a puncture pad having a hollow portion through which a simulated blood vessel is allowed to pass (for example, see Patent Literature 1).

### Citation List

### Patent Literature

Patent Literature 1: WO 2015/146273

### Summary of Invention

### Technical Problem

For such a procedure simulator as described above, it is necessary to achieve a discharge structure for simulated blood after puncture and an embedding structure for a simulated blood vessel in an upper limb model. Therefore, the structures often tend to be complicated, and, as a result, assembling for preparation of training tends to be difficult.

Therefore, an object of the present disclosure is to provide a procedure simulator that makes assembling for preparation of training easy.

### Solution to Problem

One aspect of the present disclosure is as follows.
[1] A procedure simulator used for training of introduction of a medical instrument into a radial artery in a human body, the procedure simulator including:
   an upper limb model formed by simulating an appearance of a portion including a portion extending from a hand to a forearm portion in an upper limb of the human body; and
   a puncture pad having hollow portions through which simulated blood vessels are allowed to pass, in which
   a surface on a palm side of the upper limb model has a holding groove,
   the holding groove has a pad holding groove for holding the puncture pad in a portion extending from a wrist joint to the forearm portion, and a blood vessel holding groove that extends from the pad holding groove to a proximal end side from the wrist joint to the forearm portion and holds the simulated blood vessels, and
   the upper limb model has a discharge portion that penetrates from a bottom surface of the pad holding groove to a surface on a dorsal side of the upper limb model and allows simulated blood leaking from the simulated blood vessels due to puncture into the simulated blood vessels through the puncture pad to be discharged to the dorsal side.
[2] The procedure simulator according to [1], in which the upper limb model has a through hole that expands and extends from the pad holding groove to a distal end side from the forearm portion to the wrist joint and penetrates to a dorsum of the hand of the upper limb model, in which the simulated blood vessels are arranged.
[3] The procedure simulator according to [1] or [2], further including
   a base having a holding recess portion on which the surface on the dorsal side of the portion extending from the wrist joint to the forearm portion in the upper limb model is placed, in which
   the base has a base-side discharge portion penetrating the base from a bottom surface of the holding recess portion, and the simulated blood passing through the discharge portion of the upper limb model is passable through the base-side discharge portion.
[4] The procedure simulator according to any one of [1] to [3], in which, through the hollow portions of the puncture pad, a simulated artery that simulates the radial artery and that serves as a first one of the simulated blood vessels and a simulated vein that simulates a radial vein and that serves as a second one of the simulated blood vessels are allowed to pass.
[5] The procedure simulator according to any one of [1] to [4], further including:
   a simulated artery that simulates the radial artery and that serves as a first one of the simulated blood vessels;
   a simulated vein that simulates a radial vein and that serves as a second one of the simulated blood vessels; and
   a syringe that is connected to the simulated artery and applies pressure to the simulated blood in the simulated artery.

### Advantageous Effects of Invention

According to the present disclosure, it is possible to provide a procedure simulator that makes assembling for preparation of training easy.

### Brief Description of Drawings

[Fig. 1] Fig. 1 is an upper perspective view illustrating a procedure simulator according to an embodiment of the present disclosure.
[Fig. 2] Fig. 2 is an explanatory view for explaining how to attach a simulated blood vessel to the procedure simulator illustrated in Fig. 1.
[Fig. 3] Fig. 3 is a lower perspective view in a state where a base of the procedure simulator illustrated in Fig. 1 is removed.
[Fig. 4] Fig. 4 is an upper perspective view of the base of the procedure simulator illustrated in Fig. 1.
[Fig. 5] Fig. 5 is a cross-sectional view of the procedure simulator illustrated in Fig. 1.

### Description of Embodiments

An embodiment of the present disclosure will be described in detail below with reference to the drawings.

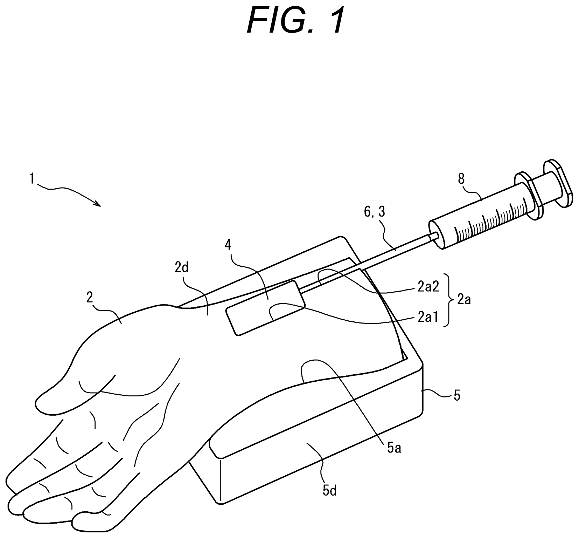

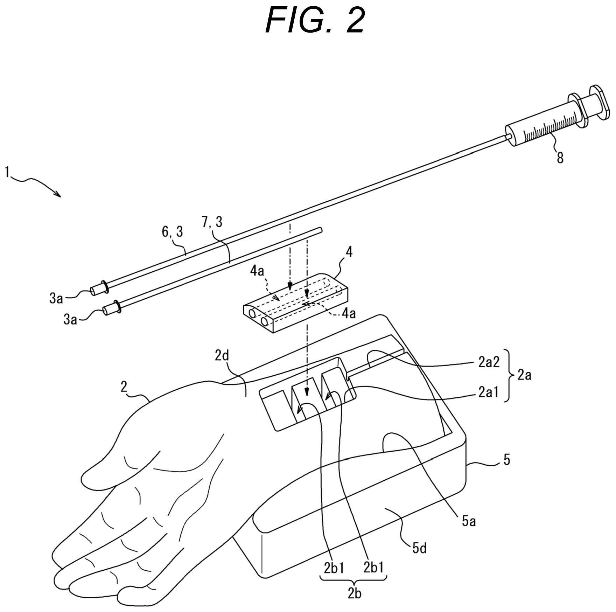

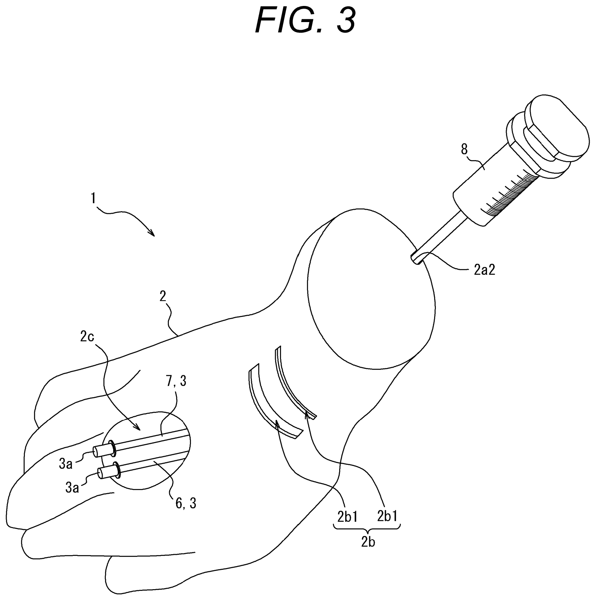

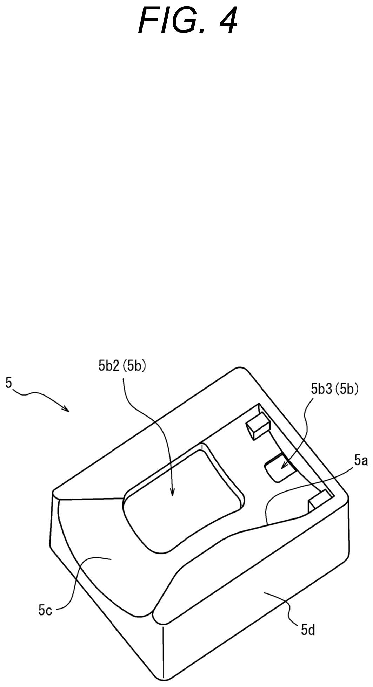

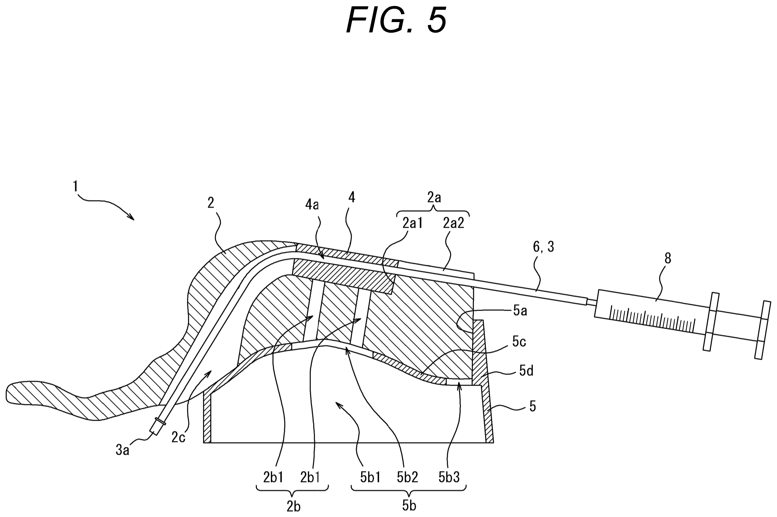

As illustrated in Fig. 1 to Fig. 5, a procedure simulator 1 used for training of introduction of a medical instrument into a radial artery in a human body is a procedure simulator 1 including: an upper limb model 2 formed by simulating an appearance of a portion including a portion extending from a hand to a forearm portion in an upper limb of the human body; and a puncture pad 4 having hollow portions 4a through which simulated blood vessels 3 are allowed to pass, in which a surface on a palm side of the upper limb model 2 has a holding groove 2a, the holding groove 2a has a pad holding groove 2a1 for holding the puncture pad 4 in a portion extending from a wrist joint to the forearm portion, and a blood vessel holding groove 2a2 that extends from the pad holding groove 2a1 to a proximal end side from the wrist joint to the forearm portion and holds the simulated blood vessels 3, and the upper limb model 2 has a discharge portion 2b that penetrates from a bottom surface of the pad holding groove 2a1 to a surface on a dorsal side of the upper limb model 2 and allows simulated blood leaking from the simulated blood vessels 3 due to puncture into the simulated blood vessels 3 through the puncture pad 4 to be discharged to the dorsal side.

According to the configuration described above, the simulated blood vessels 3 can be easily embedded in the upper limb model 2 by passing the simulated blood vessels 3 inside the puncture pad 4 and installing the puncture pad 4 in this state in the holding groove 2a. When an operation of puncturing each of the simulated blood vessels 3 with a puncture needle through the puncture pad 4 or introducing a medical instrument is repeatedly performed through training, simulated blood leaks from each of the simulated blood vessels 3 damaged through the puncture. By providing the discharge portion 2b, the simulated blood leaking from each of the simulated blood vessels 3 can be discharged by allowing the simulated blood to flow out from the bottom surface of the pad holding groove 2a1 through the discharge portion 2b beyond the surface on the dorsal side of the upper limb model 2. As a result, it is possible to suppress accumulation of the simulated blood in the upper limb model 2 and leakage of the simulated blood to the surface or a peripheral area of the puncture pad 4. In addition, since a discharge structure for the simulated blood after puncture and an embedding structure for the simulated blood vessels 3 in the upper limb model 2 can be achieved each with a simple structure, it is possible to achieve the procedure simulator 1 that is easy to assemble for preparation of training. In addition, no special device for collecting the simulated blood is required. In the present embodiment, the discharge portion 2b has, but is not limited to, a configuration in which two through holes 2b1 each form an opening thinly extending from a radial side to an ulnar side when viewed from the palm side (upper side), and, for example, may have such a configuration that one through hole 2b1 or three or more through holes 2b1 is or are provided or such a configuration that a through hole 2b1 thinly extends from the proximal end side to a distal end side when viewed from the palm side.

The upper limb model 2 is configured to include a single component. According to the configuration described above, the procedure simulator 1 can be more easily assembled. A material of the upper limb model 2 is not particularly limited, and can be formed of, for example, urethane. The upper limb model 2 has a simulated radial styloid process 2d simulating a radial styloid process. According to the configuration described above, it is possible to improve a training effect by reproducing the radial styloid process utilized as a mark for searching for a simulated artery 6 during training.

The upper limb model 2 has a through hole 2c expanding and extending from the pad holding groove 2a1 toward the distal end side from the forearm portion to the wrist joint and penetrates to a dorsum of the upper limb model 2, in which the simulated blood vessels 3 are arranged. According to the configuration described above, when the puncture pad 4 is installed in the holding groove 2a, distal end portions 3a of the simulated blood vessels 3 are inserted into the through hole 2c from a side where the holding groove 2a is present, and the simulated blood vessels 3 can be arranged while pinching and pulling each of the distal end portions 3a of the simulated blood vessels 3 in the through hole 2c with a finger and a thumb from the dorsal side as necessary, so that assembling of the procedure simulator 1 can be further facilitated. In addition, in a case where training is continuously performed, each of the simulated blood vessels 3 is pinched and pulled out from a side where the through hole 2c is present, so that a portion having a puncture mark can be moved from a puncture portion. This makes it possible to efficiently make preparation for subsequent training. When the simulated blood leaks from a puncture mark on the simulated blood vessel 6, the simulated blood can also be allowed to be discharged to the dorsal side through the through hole 2c. In addition, in a case where the simulated blood leaks from a place where there is a puncture mark where drawing is performed from the puncture pad to the distal end side, the simulated blood can be allowed to be discharged to the dorsal side through the through hole 2c. Therefore, with the through hole 2c, it is possible to further suppress such an event that the simulated blood accumulates in the upper limb model 2 or leaks to the surface or the peripheral area of the puncture pad 4.

The procedure simulator 1 includes a base 5 having a holding recess portion 5a on which is placed the surface on the dorsal side at a portion extending from the wrist joint to the forearm portion in the upper limb model 2. The base 5 has a base-side discharge portion 5b penetrating the base 5 from a bottom surface of the holding recess portion 5a, allowing the simulated blood passing through the discharge portion 2b of the upper limb model 2 to pass through the base-side discharge portion 5b. The base-side discharge portion 5b further allows the simulated blood flowing through the discharge portion 2b of the upper limb model 2 to be discharged to a lower side of the base 5. According to the configuration described above, the upper limb model 2 can be stably held during training by the holding recess portion 5a of the base 5. In addition, since the simulated blood discharged from the surface on the dorsal side of the upper limb model 2 during the training can be discharged to outside of the base 5 through the base-side discharge portion 5b, the base 5 can be simplified in structure. Therefore, the procedure simulator 1 including the base 5 can be more easily assembled.

The base-side discharge portion 5b penetrates the base 5 from the bottom surface of the holding recess portion 5a to a bottom surface of the base 5. According to the configuration described above, since the simulated blood can be discharged from the bottom surface of the base 5 to outside of the base 5 through the base-side discharge portion 5b, adhesion of the simulated blood to the base 5 can be suppressed, and, as a result, maintenance can be facilitated. For example, the simulated blood discharged from the base 5 can be absorbed with a piece of disposable water-absorbent paper (not illustrated) by setting the base 5 on the piece of disposable water-absorbent paper when performing training, so that the simulated blood can be handled together with the disposable water-absorbent paper after the training.

The base 5 includes a top wall portion 5c forming the bottom surface of the holding recess portion 5a and a peripheral wall portion 5d continuous with an outer peripheral edge portion of the top wall portion 5c, and an inner peripheral surface of the peripheral wall portion 5d and a lower surface of the top wall portion 5c form a cavity portion 5b1 opened to the lower side of the base 5. The base 5 is supported by the peripheral wall portion 5d. The top wall portion 5c has a first opening 5b2 continuing to the discharge portion 2b on the bottom surface of the holding recess portion 5a when the upper limb model 2 is placed on the bottom surface of the holding recess portion 5a. According to the configuration described above, the simulated blood discharged from the discharge portion 2b can be directly discharged to the lower side of the base 5 through the first opening 5b2 and the cavity portion 5b1 while suppressing adhesion of the simulated blood to the base 5.

The top wall portion 5c has a second opening 5b3 on a lowermost portion of the bottom surface of the holding recess portion 5a. On the bottom surface of the holding recess portion 5a, a height at a position immediately below the puncture pad 4 (a position where the first opening 5b2 is provided) is highest when the upper limb model 2a is attached, and the height decreases from the position to the proximal end side and the distal end side. According to the configuration described above, even when the simulated blood discharged and advanced from the discharge portion 2b reaches the bottom surface of the holding recess portion 5a, the simulated blood can be discharged to the lower side of the base 5 through the second opening 5b3 and the cavity portion 5b1.

In the hollow portions 4a of the puncture pad 4, the simulated artery 6 that simulates the radial artery and that serves as a first simulated blood vessel 3 and a simulated vein 7 that simulates a radial vein and that serves as a second simulated blood vessel 3 are allowed to pass through. According to the configuration described above, since structures of the radial artery and the radial vein of the human body can be reproduced by the simulated artery 6 and the simulated vein 7, the procedure simulator 1 that is large in training effect can be achieved. In the present embodiment, the simulated artery 6 and the simulated vein 7 are arranged in this order from the radial side to the ulnar side, but the simulated artery and the simulated vein may be arranged in an opposite order.

A material of the puncture pad 4 is not particularly limited, and can be formed of, for example, elastomer. The puncture pad 4 may be made of a material that can support puncture under an echo guide. A shape of the puncture pad 4 is a shape accommodated in the pad holding groove 2a1. When the puncture pad 4 is accommodated in the pad holding groove 2a1, it is preferable that the surface of the puncture pad 4 and the surface of the upper limb model 2 are smoothly connected.

A material of the simulated blood vessels 3 is not particularly limited, and it can be formed of, for example, elastomer, natural rubber, silicone, or the like. The simulated artery 6 can be formed of, for example, elastomer, natural rubber, or the like. The simulated vein 7 can be formed of, for example, silicone. An inner diameter of the simulated artery 6 is, for example, 2 mm or more and 3 mm or less in diameter. An inner diameter of the simulated vein 7 is, for example, 4 mm or more and 5 mm or less in diameter. The simulated blood vessels 3 can be disposed at a depth ranging from, for example, 2 mm or more to 2.5 mm or less from the surface on the palm side of the puncture pad 4. The simulated artery 6 is internally filled with the simulated blood, but the simulated vein 7 may be internally filled with, for example, air, water, gel, or the like. The distal end (distal end portion 3a) of the simulated artery 6 is sealed with a cap. A proximal end of the simulated artery 6 is connected with a syringe 8. The distal end (distal end portion 3a) and a proximal end of the simulated vein 7 may be sealed when the simulated vein 7 is filled with water or gel, but may not be sealed when the simulated vein 7 is filled with air.

The procedure simulator 1 includes: the simulated artery 6 that simulates the radial artery and that serves as the first simulated blood vessel 3; the simulated vein 7 that simulates the radial vein and that serves as the second simulated blood vessel 3; and the syringe 8 serving as a pressurizing device that is connected to the simulated artery 6 and applies pressure to the simulated blood filled in the simulated artery 6. According to the configuration described above, an assistant can reproduce pulsation of a blood vessel by manually applying pressure to the simulated artery 6 with the syringe 8 repeatedly. As a result, the procedure simulator 1 that is large in training effect can be achieved.

It is also possible to connect a pulsatile pump as a pressurization device for the procedure simulator 1. In this case, however, since the device may be increased in size or an amount of simulated blood to be used may increase, it is preferable that the training assistant manually and repeatedly performs pressurization and depressurization using the syringe 8 to impart pulsation to the simulated artery 6. As a result, since the procedure simulator 1 can be downsized as a set, it is possible to achieve the procedure simulator 1 that is excellent in portability and is environmentally friendly without using electric power. In addition, since the amount of simulated blood to be used can be reduced, compared with a case where a pulsatile pump is used as a pressurizing device, training can be easily performed even in a place where there is no water supply facility.

The embodiment of the present disclosure has been described above. The present disclosure, however, is not limited to the above-described embodiment, and thus the above-described embodiment can be variously modified without departing from the gist of the present disclosure.

### Reference Signs List

- 1: procedure simulator
- 2: upper limb model
- 2a: holding groove
- 2a1: pad holding groove
- 2a2: blood vessel holding groove
- 2b: discharge portion
- 2b1: through hole
- 2c: through hole
- 2d: simulated radial styloid process
- 3: simulated blood vessel
- 3a: distal end portion
- 4: puncture pad
- 4a: hollow portion
- 5: base
- 5a: holding recess portion
- 5b: base-side discharge portion
- 5b1: cavity portion
- 5b2: first opening
- 5b3: second opening
- 5c: top wall portion
- 5d: peripheral wall portion
- 6: simulated artery
- 7: simulated vein
- 8: syringe

## Claims

1. A procedure simulator used for training of introduction of a medical instrument into a radial artery in a human body, the procedure simulator comprising:
an upper limb model formed by simulating an appearance of a portion including a portion extending from a hand to a forearm portion in an upper limb of the human body; and
a puncture pad having hollow portions through which simulated blood vessels are allowed to pass, wherein
a surface on a palm side of the upper limb model has a holding groove,
the holding groove has a pad holding groove for holding the puncture pad in a portion extending from a wrist joint to the forearm portion, and a blood vessel holding groove that extends from the pad holding groove to a proximal end side from the wrist joint to the forearm portion and holds the simulated blood vessels, and
the upper limb model has a discharge portion that penetrates from a bottom surface of the pad holding groove to a surface on a dorsal side of the upper limb model and allows simulated blood leaking from the simulated blood vessels due to puncture into the simulated blood vessels through the puncture pad to be discharged to the dorsal side.

2. The procedure simulator according to claim 1, wherein the upper limb model has a through hole that expands and extends from the pad holding groove to a distal end side from the forearm portion to the wrist joint and penetrates to a dorsum of the hand of the upper limb model, in which the simulated blood vessels are arranged.

3. The procedure simulator according to claim 1, further comprising
a base having a holding recess portion on which the surface on the dorsal side of the portion extending from the wrist joint to the forearm portion in the upper limb model is placed, wherein
the base has a base-side discharge portion penetrating the base from a bottom surface of the holding recess portion, and the simulated blood passing through the discharge portion of the upper limb model is passable through the base-side discharge portion.

4. The procedure simulator according to claim 1, wherein, through the hollow portions of the puncture pad, a simulated artery that simulates the radial artery and that serves as a first one of the simulated blood vessels and a simulated vein that simulates a radial vein and that serves as a second one of the simulated blood vessels are allowed to pass.

5. The procedure simulator according to claim 1, further comprising:
a simulated artery that simulates the radial artery and that serves as a first one of the simulated blood vessels;
a simulated vein that simulates a radial vein and that serves as a second one of the simulated blood vessels; and
a syringe that is connected to the simulated artery and applies pressure to the simulated blood in the simulated artery.
